# EUROPEAN PATENT APPLICATION

(11) **EP 4 380 233 A1**
(43) Date of publication of application: **05.06.2024**
(21) Application number: 21951173.0
(22) Date of filing: 26.07.2021
(51) Int. Cl.: H04W 36/00

(54) **BEHAVIOR CONTROL METHOD AND APPARATUS**

(71) Applicant: Beijing Xiaomi Mobile Software Co., Ltd., Beijing 100085 (CN)
(72) Inventor: HONG, Wei, Beijing 100085 (CN)
(74) Representative: Hughes, Andrea Michelle
(86) International application number: PCT/CN2021/108509
(87) International publication number: WO 2023/004555

(57) **Abstract**

The present disclosure provides a behavior control method and apparatus. The method includes: receive a handover instruction sent by a source base station, where the handover instruction is configured to instruct the terminal to hand over from the source base station to a target base station, and to indicate a behavior control policy for the target base station. The source base station may instruct the terminal to hand over base stations while also indicating the behavior control policy for the target base station to the terminal, such that signaling overhead is reduced. Furthermore, the terminal is informed about the behavior control policy for the target base station before accessing the target base station, and subsequently, the terminal can control its own non-wireless communication behavior according to the behavior control policy in a timely manner after accessing the target base station, such that the efficiency of behavior control is improved.

## Description

### TECHNICAL FIELD

The present disclosure relates to the field of communication technologies, and in particular to behavior control methods, behavior control apparatuses, and a computer-readable storage media.

### BACKGROUND

With the development of mobile communication, the functions of mobile terminals are becoming increasingly powerful. However, in some special scenes, the use of terminals may be restricted, that is, the behavior of the terminal is controlled, such as prohibiting the terminal from performing specific functions.

For example, in public places such as libraries, high-speed railways, subways, and so on, it may be necessary to keep the terminal silent, for example, to prohibit the terminal from ringing, etc. In some places involving confidentiality, it may be prohibited to turn on the location service of the terminal, etc.

When the terminal enters the scenes with use restrictions, how to quickly control the behavior of the terminal is a problem that needs to be solved.

### SUMMARY

In view of this, embodiments of the present disclosure provide behavior control methods and apparatuses to solve technical problems in the related art.

According to a first aspect of embodiments of the present disclosure, there is provided a behavior control method, performed by a terminal, and including:
receiving a handover instruction sent by a source base station, where the handover instruction is configured to instruct the terminal to hand over from the source base station to a target base station, and to indicate a behavior control policy for the target base station.

In an embodiment, the method further includes: handing over, based on the handover instruction, from the source base station to the target base station; and after successfully handing over to the target base station, controlling a non-wireless communication behavior of the terminal according to the behavior control policy.

According to a second aspect of embodiments of the present disclosure, there is provided a behavior control method, performed by a source base station, and including:
sending a handover instruction to a terminal, where the handover instruction is configured to instruct the terminal to hand over from the source base station to a target base station, and to indicate a behavior control policy for the target base station.

In an embodiment, the behavior control policy is configured to instruct the terminal to control a non-wireless communication behavior of the terminal after the terminal hands over from the source base station to the target base station.

According to a third aspect of embodiments of the present disclosure, there is provided a behavior control method, performed by a target base station, and including:
sending indication information for a behavior control policy for the target base station to a core network device; where the behavior control policy is configured to instruct a terminal to control a non-wireless communication behavior of the terminal after the terminal hands over to the target base station.

According to a fourth aspect of embodiments of the present disclosure, there is provided a behavior control method, performed by a core network device, and including:
obtaining indication information for a behavior control policy for a target base station, where the behavior control policy is configured to instruct a terminal to control a non-wireless communication behavior of the terminal after the terminal hands over to the target base station; and
sending the indication information to a source base station.

According to a fifth aspect of embodiments of the present disclosure, there is provided a behavior control apparatus, including:
a receiving module, configured to receive a handover instruction sent by a source base station, where the handover instruction is configured to instruct the terminal to hand over from the source base station to a target base station, and to indicate a behavior control policy for the target base station.

According to a sixth aspect of embodiments of the present disclosure, there is provided a behavior control apparatus, including:
a sending module, configured to send a handover instruction to a terminal, where the handover instruction is configured to instruct the terminal to hand over from the source base station to a target base station, and to indicate a behavior control policy for the target base station. The behavior control policy is configured to instruct the terminal to control a non-wireless communication behavior of the terminal after the terminal hands over from the source base station to the target base station.

According to a seventh aspect of embodiments of the present disclosure, there is provided a behavior control apparatus, including:
a sending module, configured to send indication information for a behavior control policy for the target base station to a core network device, where the behavior control policy is configured to instruct the terminal to control a non-wireless communication behavior of the terminal after the terminal hands over to the target base station.

According to an eighth aspect of embodiments of the present disclosure, there is provided a behavior control apparatus, including:
a receiving module, configured to obtain indication information for a behavior control policy for a target base station, where the behavior control policy is configured to instruct the terminal to control a non-wireless communication behavior of the terminal after the terminal hands over to the target base station; and
a sending module, configured to send the indication information to a source base station.

According to a ninth aspect of embodiments of the present disclosure, there is provided a behavior control device, including:
a processor; and
a memory storing computer programs;
where the computer programs, when executed by the processor, cause the processor to perform the above-mentioned behavior control methods.

According to a tenth aspect of embodiments of the present disclosure, there is provided a computer-readable storage medium storing computer programs thereon, where the computer programs, when executed by a processor, cause the processor to perform the above-mentioned behavior control methods.

According to embodiments of the present disclosure, the source base station may instruct the terminal to hand over base stations while also indicating the behavior control policy for the target base station to the terminal, such that signaling overhead is reduced. Furthermore, the terminal is informed about the behavior control policy for the target base station before accessing the target base station, and subsequently, the terminal can control its own non-wireless communication behavior according to the behavior control policy in a timely manner after accessing the target base station, such that the efficiency of behavior control is improved.

### BRIEF DESCRIPTION OF THE DRAWINGS

In order to more clearly describe the technical solutions in the embodiments of the present disclosure, the drawings required for descriptions of the embodiments of the present disclosure will be briefly introduced below. Apparently, the drawings described hereunder are only some embodiments of the present disclosure. Those skilled in the art may obtain other drawings based on these drawings without making creative work.
FIG. 1 is a schematic flowchart illustrating a behavior control method according to an embodiment of the present disclosure.
FIG. 2 is a schematic flowchart illustrating a behavior control method according to another embodiment of the present disclosure.
FIG. 3 is a schematic flowchart illustrating a behavior control method according to yet another embodiment of the present disclosure.
FIG. 4 is a schematic flowchart illustrating a behavior control method according to still another embodiment of the present disclosure.
FIG. 5 is a schematic flowchart illustrating a behavior control method according to still another embodiment of the present disclosure.
FIG. 6 is a schematic flowchart illustrating a behavior control method according to still another embodiment of the present disclosure.
FIG. 7 is a schematic flowchart illustrating a behavior control method according to still another embodiment of the present disclosure.
FIG. 8 is a schematic flowchart illustrating a behavior control method according to still another embodiment of the present disclosure.
FIG. 9 is a schematic flowchart illustrating a behavior control method according to still another embodiment of the present disclosure.
FIG. 10 is a schematic flowchart illustrating a behavior control method according to still another embodiment of the present disclosure.
FIG. 11 is a schematic flowchart illustrating a behavior control method according to still another embodiment of the present disclosure.
FIG. 12 is a schematic flowchart illustrating a behavior control method according to still another embodiment of the present disclosure.
FIG. 13 is a schematic block diagram illustrating a behavior control apparatus according to an embodiment of the present disclosure.
FIG. 14 is a schematic block diagram illustrating a behavior control apparatus according to another embodiment of the present disclosure.
FIG. 15 is a schematic block diagram illustrating a behavior control apparatus according to yet another embodiment of the present disclosure.
FIG. 16 is a schematic block diagram illustrating a behavior control apparatus according to still another embodiment of the present disclosure.
FIG. 17 is a schematic block diagram illustrating a behavior control device according to an embodiment of the present disclosure.
FIG. 18 is a schematic block diagram illustrating a behavior control device according to another embodiment of the present disclosure.

### DETAILED DESCRIPTION OF THE EMBODIMENTS

The technical solutions of the embodiments of the present disclosure will be fully and clearly described below in combination with the drawings in the embodiments of the present disclosure. Apparently, the embodiments described herein are only some embodiments of the present disclosure rather than all embodiments of the present disclosure. Other embodiments obtained by persons of ordinary skill in the art based on these embodiments of the present disclosure without making inventive work shall all fall within the scope of protection of the present disclosure

The terms used in the present disclosure are for the purpose of describing particular examples only, and are not intended to limit the present disclosure. Terms determined by "a", "the" and "the" in their singular forms in the present disclosure and the appended claims are also intended to include plurality, unless clearly indicated otherwise in the context. It should also be understood that the term "and/or" as used herein refers to and includes any and all possible combinations of one or more of the associated listed items.

It is to be understood that, although the terms "first," "second," "third," and the like may be used in the present disclosure to describe various information, such information should not be limited to these terms. These terms are only used to distinguish one category of information from another. For example, without departing from the scope of the present disclosure, first information may be referred as second information; and similarly, the second information may also be referred as the first information. Depending on the context, the term "if" as used herein may be interpreted as "when" or "upon" or "in response to determining".

For the purposes of brevity and ease of understanding, the terms "greater than" or "less than", "higher than" or "lower than" are used herein to characterize size relationships. However, for those skilled in the art, it will be understood that the term "greater than" also covers the meaning of "greater than or equal to", and the term "less than" also covers the meaning of "less than or equal to"; the term "higher than" covers the meaning of "higher than or equal to", and the term "lower than" covers the meaning of "lower than or equal to".

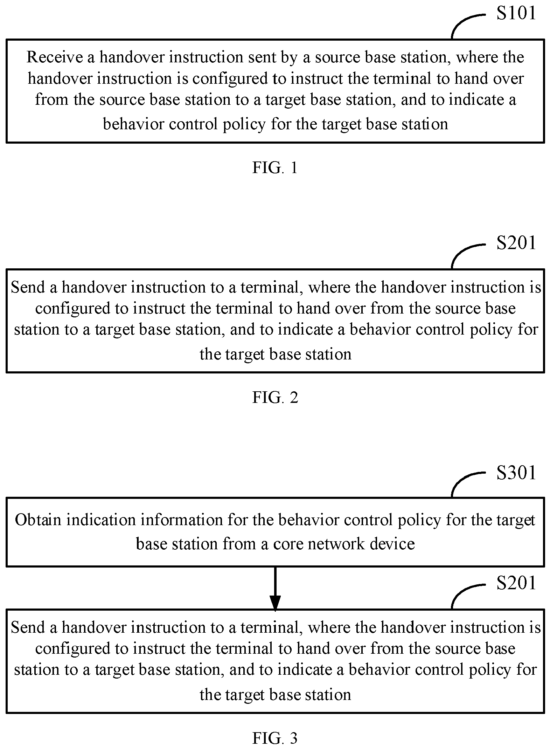

FIG. 1 is a schematic flowchart illustrating a behavior control method according to an embodiment of the present disclosure. The behavior control method shown in this embodiment may be performed by a terminal. The terminal includes, but is not limited to, a communication device such as a cell phone, a tablet computer, a wearable device, a sensor, an IoT device, and the like. The terminal as a user equipment may communicate with a base station. The base station includes, but is not limited to, a base station in a communication system such as a 4^{th} generation (4G) base station, a 5^{th} generation (5G) base station, a 6^{th} generation (6G) base station, and the like. In an embodiment, the base station may be a base station to which the behavior control method described in any subsequent embodiment applies.

As shown in FIG. 1, the behavior control method may include the following step S101.

At step S101, a handover instruction sent by a source base station is received, where the handover instruction is configured to instruct the terminal to hand over from the source base station to a target base station, and to indicate a behavior control policy for the target base station.

In an embodiment, the terminal is in a connected state.

In an embodiment, the source base station may send a handover instruction to the terminal. The handover instruction indicates at least two types of information. A first type of information is handover information, which instruct the terminal to hand over from the source base station to the target base station. A second type of information is behavior control information, which indicates a behavior control policy for the target base station.

In an embodiment, the source base station may determine whether the terminal needs to be instructed to hand over based on a measurement report reported by the terminal. For example, if the source base station determines that the signal strength of the target base station received by the terminal is higher than the signal strength of the source base station, the handover instruction is sent to the terminal to instruct the terminal to hand over to the target base station.

In an embodiment, the source base station may obtain a location of the terminal, and if the terminal enters an area where behavior control is required, such as entering a subway car, the source base station may instruct the terminal to hand over to the target base station corresponding to the location.

In an embodiment, the handover instruction may instruct the terminal to hand over immediately upon instructing the terminal to hand over to the target base station. As a result, the terminal, in response to receiving the handover instruction, may attempt to access the target base station, and disconnect from the source base station.

In an embodiment, the handover instruction, when instructing the terminal to hand over to the target base station, may instruct the terminal to hand over when a handover condition is met. The handover condition may be that the signal strength of the target base station received by the terminal is greater than a threshold value, or that the signal strength of the target base station received by the terminal is greater than the signal strength of the source base station, etc.; or the handover condition may be that the terminal enters a designated area, and the terminal may hand over to the target base station when the terminal is determined to enter the designated area by means of a localization function or the like. In an embodiment, the handover condition may also be indicated by the handover instruction, for example, the handover instruction may include an identification of the target base station, and a handover condition corresponding to the target base station. As a result, the terminal may attempt to access the target base station, and disconnect from the source base station, when the handover conditions are met.

In an embodiment, the handover instruction may be a command used in related art to instruct the terminal to perform the handover. For example, when the base station is a 4G base station, such as an evolved universal terrestrial radio access network (EUTRAN) base station, and the handover instruction may be a radio resource controlled connection reconfiguration (RRCCONNECTIONRECONFIGURATION) signaling. For example, when the base station is a 5G base station, such as a new radio (NR) base station, and the handover instruction may be a radio resource control reconfiguration (RRCRECONFIGURATION) signaling, alternatively, the handover instruction may be a mobility control information (MobilityControlInfo) signaling.

It will be noted that the above-mentioned command in related art has defined functions that include handover information. In an embodiment, information for indicating the behavior control policy for the target base station may be added to the command, whereby the terminal may receive the handover information while also obtaining the behavior control policy for the target base station, such that the signaling overhead is reduced. In addition, the terminal is informed of the behavior control policy for the target base station before accessing the target base station. According to the handover instruction, the terminal can subsequently not only perform the base station handover, but can also control its own non-wireless communication behaviors in accordance with the behavior control policy in a timely manner after successfully accessing the target base station, thereby the efficiency of behavior control is improved.

In an embodiment, the method further includes: handing over from the source base station to the target base station based on the handover instruction; and after successfully handing over to the target base station, controlling the non-wireless communication behavior of the terminal in accordance with the behavior control policy.

In an embodiment, the terminal, after receiving the handover instruction, may hand over from the source base station to the target base station in accordance with the handover instruction, and the terminal may also obtain the behavior control policy for the target base station in accordance with the handover instruction.

In an embodiment, the handover instruction may include a base station type including at least one of a base station type of the target base station corresponding to the behavior control policy for the target base station; or at least one behavior control policy.

In an embodiment, a correspondence between the base station type and the behavior control policy may be stored in the terminal. For example, the correspondence may be sent to the terminal in advance by the base station.

For example, the correspondence may be as shown in Table 1.

**Table 1**

| | |
|---|---|
| Base station type | Behavior control policy |
| Silent base station | Turn off output volume |
| Display control base station | Reduce screen brightness |

It is to be noted that the base station types and correspondences in the Table 1 are only exemplary illustrations, and in practice, other base station types may be included, and each base station type may correspond to one or more behavior control policies, which are not limited by this embodiment.

In an embodiment, the handover instruction includes the base station type of the target base station. For example, the handover instruction may include an identification of the base station type, which may be an integer type, an enumeration type, a string type, etc., such that the terminal can determine the base station type of the target base station based on the identification, and this embodiment does not qualify the specific form of the identification. After receiving the handover instruction, the terminal may query the behavior control policy corresponding to the base station type in the correspondences.

In an embodiment, the handover instruction includes at least one behavior control policy. For example, the handover instruction may include an identification of the behavior control policy, which may be of an integer type, an enumeration type, a string type, etc., such that the terminal can determine the behavior control policy based on the identification after receiving the handover instruction, and this embodiment does not qualify the specific form of the identification. The terminal may directly determine the behavior control policy for the target base station after receiving the handover instruction.

In an embodiment, the behavior control policy is configured to control the non-wireless communication behavior of the terminal. That is, when the terminal accesses the target base station, the terminal needs to follow the behavior control policy to control the non-wireless communication behavior indicated by the behavior control policy.

According to the embodiment shown in FIG. 1, the source base station may instruct the terminal to perform the base station handover while also indicating the terminal about the behavior control policy for the target base station, such that signaling overhead is reduced. In addition, the terminal is informed of the behavior control policy for the target base station before accessing the target base station, and can control its own non-wireless communication behavior in accordance with the behavior control policy in a timely manner after accessing the target base station, such that the efficiency of behavior control is improved.

In an embodiment, the behavior control policy may include at least one of an identification for the non-wireless communication behavior; a control mode for the non-wireless communication behavior; a control duration for the non-wireless communication behavior; or a control magnitude for the non-wireless communication behavior.

In an embodiment, the behavior control policy includes the identification for the non-wireless communication behavior and the control mode for the non-wireless communication behavior. After obtaining the behavior control policy, the terminal may determine at least one non-wireless communication behavior included in the behavior control policy, and the control mode for the wireless communication behavior, so that the terminal may control the non-wireless communication behavior according to the control mode.

In an embodiment, the behavior control policy may include only the identification for the non-wireless communication behavior, such that the terminal may control the non-wireless communication behavior in accordance with a default manner after obtaining the behavior control policy.

In an embodiment, the non-wireless communication behavior includes at least one of an audio output behavior, a display behavior, a prompting behavior, or a power supply behavior.

The control modes may be the same or different for different non-wireless communication behaviors. For different non-wireless communication behaviors, the information of the control modes in the behavior control policy may be the same, but may represent different meanings. For example, a bit corresponding to the control mode in the behavior control policy is 01, which indicates that the control mode is to reduce the output volume for the audio output behavior, and indicates that the control mode is to adjust to the vibration mode for the prompting behavior.

For example, the non-wireless communication behavior is an audio output behavior. The control mode may include one of raising, lowering, turning off, or adjusting to a non-output mode. For the audio output behavior, raising means raising the output volume, lowering means lowering the output volume, turning off means silence, and adjusting to a non-output mode means adjusting to a headphone output mode, so that if no headphone is connected, no audio can be output, and after connecting a headphone (including a wireless headphone and a wired headphone), the audio is output from the headphone.

For example, the non-wireless communication behavior is a display behavior (including, but being not limited to, the behavior of displaying a screen such as an image, a video, etc.) The control mode may include one of raising, lowering, and turning off. For the display behavior, raising means raising the display effect, lowering means lowering the display effect, and turning off means turning off the screen. The display effect includes, but is not limited to, one of brightness, chromaticity, or contrast.

For example, the non-wireless communication behavior is a prompting behavior. The control mode may include one of: adjusting to a ringing mode, adjusting to a vibrating mode, adjusting to a silent mode, and adjusting to a vibrating ringing mode. For the prompting behavior, the prompting behavior may be adjusted to a corresponding mode according to the control mode, and if the control mode is already the corresponding mode, no adjustment is required.

For example, the non-wireless communication behavior is a power supply behavior. the control mode may include one of adjusting to a power saving mode, and adjusting to a normal power supply mode. For the power supply behavior, the power supply behavior can be adjusted to a corresponding mode according to the control method, and if the control mode is already the corresponding mode, no adjustment is required.

It is to be noted that the above-mentioned multiple non-wireless communication behaviors, and their corresponding control modes are only exemplary illustrations, and the present disclosure are not limited to herein.

In an embodiment, the base station includes at least one of a subway base station, or a high-speed rail base station.

illustrating a subway base station as an example, since a public transportation vehicle such as a subway is a relatively closed space, some behaviors of the terminal will have a greater impact on other passengers in the subway, such as playing audio. In order to better regulate the use of terminals, the behavior control policy for the subway base station can be adopted. The coverage area of the subway base station includes areas along the subway. When the terminal enters the coverage area of the subway base station, the terminal can hand over to the subway base station according to the handover instruction of the source base station. As well, the terminal may obtain a behavior control policy for the subway base station according to the handover instruction of the source base station. For example, if the non-wireless communication behavior of the behavior control policy is an audio output behavior, and the corresponding control mode is a mode of turning off, the terminal of the passenger may adjust to silence after receiving the indication information, thereby avoiding impacting other passengers. This process eliminates the need for human monitoring, saves labor costs, and does not cause omission of certain terminals, and comprehensively and effectively controls the non-wireless communication behaviors that are mainly prohibited by the terminals in the subway.

In an embodiment, the source base station may, in addition to indicating the non-wireless communication behaviors to be controlled by the terminal and the corresponding control mode by the handover instruction, also indicate a control duration, a control magnitude, and the like of the terminal by the handover instruction.

The control duration is a duration for controlling the non-wireless communication behavior according to the control mode. The control magnitude is a magnitude for controlling the non-wireless communication behavior according to the control mode.

In an embodiment, the behavior control policy includes an identification for the non-wireless communication behavior, a control mode for the non-wireless communication behavior, and a control duration for the non-wireless communication behavior. The terminal may control the non-wireless communication behavior within the control duration according to the control mode;
In an embodiment, the behavior control policy includes an identification for the non-wireless communication behavior, a control mode for the non-wireless communication behavior, and a control magnitude for the non-wireless communication behavior. The terminal may control the non-wireless communication behavior with the control magnitude according to the control mode.

For example, if the non-wireless communication behavior is audio output, the control mode is a mode of lowering, the control duration is 20 minutes, and the control magnitude is 50%, then the terminal may lower the volume of its audio output by 50% and maintain the audio for 20 minutes.

According to the above-mentioned embodiments, a more accurate control of the terminal can be realized, which is conducive to improving the experience of the terminal user.

FIG. 2 is a schematic flowchart illustrating a behavior control method according to another embodiment of the present disclosure. The behavior control method shown in this embodiment may be performed by a source base station. The source base station includes, but is not limited to, a base station in a communication system such as a 4G base station, a 5G base station, a 6G base station, and the like. The source base station may communicate with a terminal as a user equipment. The terminal includes, but is not limited to a communication device such as a cell phone, a tablet computer, a wearable device, a sensor, an IoT device, and the like. In an embodiment, the terminal may be a terminal to which the behavior control method in any of the above-mentioned embodiments applies.

As shown in FIG. 2, the behavior control method may include the following step S201.

At step S201, a handover instruction is sent to the terminal, where the handover instruction is configured to instruct the terminal to hand over from the source base station to a target base station, and to indicate a behavior control policy for the target base station.

In an embodiment, the behavior control policy is configured to instruct the terminal to control a non-wireless communication behavior of the terminal after the terminal hands over from the source base station to the target base station.

In an embodiment, the handover instruction sent by the source base station may be a command used in the related art to instruct the terminal to perform the handover. The handover instruction may be, for example, a RRCCONNECTIONRECONFIGURATION signaling, a RRCRECONFIGURATION signaling, or a MobilityControlInfo signaling, and the like.

In an embodiment, the handover instruction may include at least one of: a base station type of a target base station corresponding to the behavior control policy for the target base station; or at least one behavior control policy.

In an embodiment, the terminal may hand over to the target base station according to the handover instruction, as well as obtain the behavior control policy for the target base station according to the handover instruction. As a result, the terminal may follow the behavior control policy for the target base station after accessing the target base station, and control the non-wireless communication behavior indicated by the behavior control policy.

Referring to the embodiment shown in FIG. 1, the specific introduction of the behavior control policy will not be repeated here.

According to the embodiment shown in FIG. 2, the source base station may instruct the terminal to perform the base station handover while also indicating the terminal about the behavior control policy for the target base station, such that signaling overhead is reduced. In addition, the terminal is informed of the behavior control policy for the target base station before accessing the target base station, and can control its own non-wireless communication behavior in accordance with the behavior control policy in a timely manner after accessing the target base station, such that the efficiency of behavior control is improved.

FIG. 3 is a schematic flowchart illustrating a behavior control method according to yet another embodiment of the present disclosure. As shown in FIG. 3, before sending the handover instruction to the terminal, the behavior control method further includes the following step S301.

At step S301, indication information for the behavior control policy for the target base station is obtained from a core network device.

In an embodiment, the indication information is a base station type of the target base station. That is, the source base station may obtain the base station type of the target base station from the core network device.

The source base station, after obtaining the base station type of the target base station, may also determine a behavior control policy for the target base station based on a correspondence between the preset base station type and the behavior control policy. The correspondence between the base station type and the behavior control policy may be obtained by the source base station in advance from the core network device, for example, the correspondence may be as shown in FIG. 1, and will not be repeated here.

According to the embodiment shown in FIG. 3, the source base station may obtain the indication information for the behavior control policy for the target base station from the core network device, whereby the indication information may be sent to the terminal, causing the terminal to control its own non-wireless communication behavior in accordance with the behavior control policy after accessing the target base station.

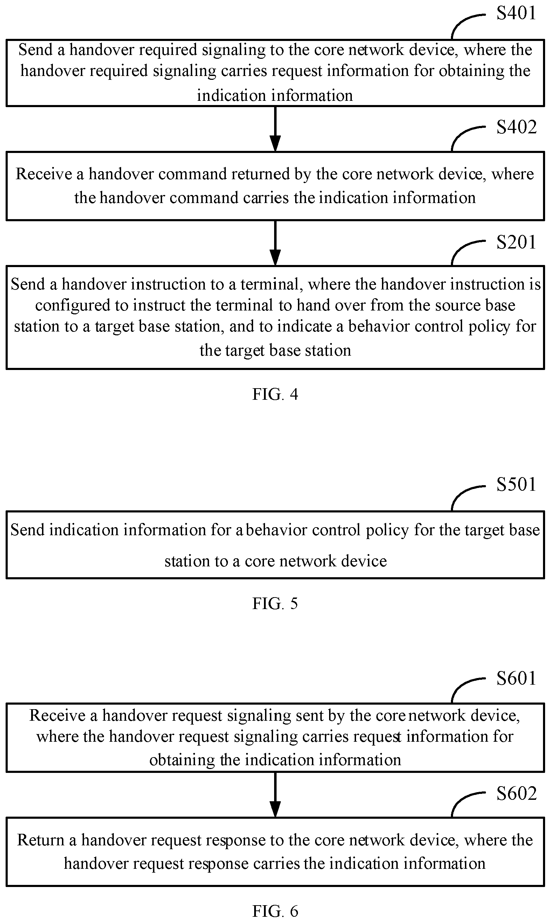

In an embodiment, the source base station may take the initiative to obtain the indication information for the behavior control policy from the core network device, for example, by sending a request for obtaining the indication information to the core network device based on the "handover process". The following is an illustration with reference to FIG. 4.

FIG. 4 is a schematic flowchart illustrating a behavior control method according to still another embodiment of the present disclosure. As shown in FIG. 4, obtaining the indication information for the behavior control policy for the target base station from the core network device includes the following steps S401 to S402.

At step S401, a handover required signaling is sent to the core network device, where the handover required signaling carries request information for obtaining the indication information.

In an embodiment, the source base station may request the core network device to send the handover required signaling via an interface between the base station and the core network. Also, the source base station may request in this signaling to obtain the behavior control policy for the target base station.

Since a handover required command in the related art carries an identification of the target base station without additionally indicating. Instead, for the request information for obtaining the behavior control policy for the target base station, a field may be added to the handover required signaling for indicating the obtaining of the behavior control policy for the target base station according to the negotiation or the protocol agreement between the source base station and the core network device. For example, when the value of this field is 1, which indicates that the source base station needs to obtain the behavior control policy for the target base station; when the value of this field is 0, which indicates that the source base station does not need to obtain the behavior control policy for the target base station.

At step S402, a handover command returned by the core network device is received, where the handover command carries the indication information.

In an embodiment, the core network device, after receiving a request from the source base station, may send a handover command to the source base station via an interface between the base station and the core network if it determines that handover is allowed. Also, the indication information for the behavior control policy for the target base station, such as a base station type of the target base station, or an identification of the behavior control policy, may be carried in this signaling.

According to the above-mentioned embodiment, the source base station may actively obtain the indication information for the behavior control policy for the target base station from the core network device based on the handover required signaling in the handover process. Also, the core network device may return the indication information based on the handover command in the handover process, i.e., the source base station obtains the behavior control policy for the target base station by means of the handover process in the related at. On the one hand, there is no need to transmit additional signaling, which saves signaling overhead, and on the other hand, the "handover process" and the "behavior control process" can be performed at the same time, which improves processing efficiency.

It is to be noted that the above-mentioned embodiment is only an example of obtaining, by the source base station, the indication information for the behavior control policy for the target base station from the core network device. In actual application, the source base station may also obtain the indication information for the behavior control policy for the target base station from the target base station, for example, obtaining the base station type of the target base station, or obtaining a certain number of behavior control policies of the target base station, and so on. Similar to obtaining the indication information from the core network device, the detail will not be repeated here.

FIG. 5 is a schematic flowchart illustrating a behavior control method according to still another embodiment of the present disclosure. The behavior control method shown in this embodiment may be performed by a target base station. The target base station includes, but is not limited to, a base station in a communication system such as a 4G base station, a 5G base station, a 6G base station, and the like. The target base station may communicate with a terminal as a user equipment. The terminal includes, but is not limited to a communication device such as a cell phone, a tablet computer, a wearable device, a sensor, an IoT device, and the like. In an embodiment, the terminal may be a terminal to which the behavior control method in any of the above-mentioned embodiments applies.

As shown in FIG. 5, the behavior control method may include the following step S501.

At step S501, indication information for a behavior control policy for the target base station is sent to a core network device.

In an embodiment, the behavior control policy is configured to instruct the terminal to control the non-wireless communication behavior of the terminal after the terminal hand over to the target base station.

In an embodiment, the target base station may send the indication information for its own behavior control policy to the core network device. The indication information may be a base station type of the target base station, or the indication information may also be an identification of a number of behavior control policies. As a result, the core network device may send the indication information to the source base station, and the source base station may send the indication information to the terminal. As the embodiment shown in FIG. 2, the detail will not be repeated here.

In an embodiment, the indication information is a base station type of the target base station, where the base station type corresponds to the behavior control policy for the target base station, i.e., the target base station may send its own base station type to the core network device.

In an embodiment, a correspondence between the base station type and the behavior control policy may be stored in the core network device, whereby the core network device may determine the behavior control policy for the target base station based on the base station type of the target base station, and send the behavior control policy for the target base station directly to the source base station.

In an embodiment, the core network device may directly send the base station type of the target base station to the source base station, and the source base station may directly send the base station type to the terminal. Alternatively, the source base station may determine the behavior control policy based on the correspondence between the base station type and the behavior control policy, and send the determined behavior control policy to the terminal.

In an embodiment, the target base station may send the indication information to the core network device based on the "handover process", as described in FIG. 6 below.

FIG. 6 is a schematic flowchart illustrating a behavior control method according to still another embodiment of the present disclosure. As shown in FIG. 6, sending the indication information for the behavior control policy for the target base station to the core network device may include the following steps S601 to S602.

At step S601, a handover request signaling sent by the core network device is received, where the handover request signaling carries request information for obtaining the indication information.

In an embodiment, the core network device may send the handover request signaling to the target base station, and request in the signaling to obtain the behavior control policy for the target base station. For example, a field may be added to the handover request signaling for the indication information for obtaining the behavior control policy.

At step S602, a handover request response is returned to the core network device, where the handover request response carries the indication information.

In an embodiment, the target base station may return a handover request response (such as a handover request acknowledge signaling) to the core network device after receiving the handover request signaling from the core network device. Also, the target base station carries, in this handover request response, the indication information for the behavior control policy of this base station, which may be the base station type of the target base station, or the indication information may also be an identification of a number of behavior control policies, etc., and this embodiment does not limit the manner of indication.

According to the embodiment shown in FIG. 6, the target base station may send the indication information for the behavior control policy to the core network device based on the handover process in the related art. On the one hand, an additional signaling does not need to be transmitted, such that the signaling overhead is reduced. On the other hand, the "handover process" and the "behavior control process" can be performed at the same time, which improves the processing efficiency.

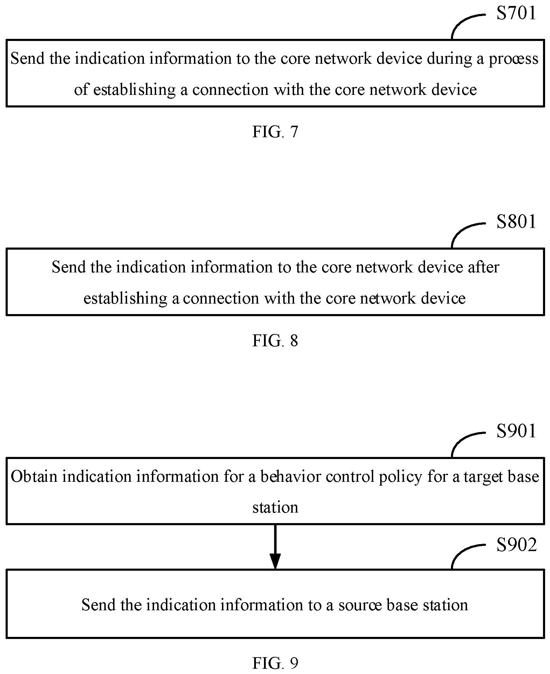

In an embodiment, the target base station may not be based on the "handover process", but may be sent to the core network device in advance through an interface between the base station and the core network. This is described below in conjunction with FIGS. 7 and FIG. 8.

FIG. 7 is a schematic flowchart illustrating a behavior control method according to still another embodiment of the present disclosure.

As shown in FIG. 7, sending the indication information for the behavior control policy for the target base station to the core network device may include the following step S701.

At step S701, the indication information is sent to the core network device during a process of establishing a connection with the core network device.

For example, the core network may be a 4G core network, the target base station may establish an S1 interface connection with the core network device, and the target base station may send an S1 setup request (S1 interface establishment request) signaling carrying the indication information to the core network device. For example, the core network may be a 5G core network, the target base station may establish an NG interface connection with the core network device, and the target base station may send an NG setup request (NG interface establishment request) signaling carrying the indication information to the core network device.

According to the embodiment shown in FIG. 7, the target base station may indicate the behavior control policy of this base station to the core network device during the process of establishing the connection with the core network device. On the one hand, an additional signaling does not need to be added, such that the signaling overhead is reduced. On the other hand, the core network device is allowed to obtain in advance the indication information for the behavior control policy for the target base station, such that the impact of the untimely obtaining of the information in the follow-up is avoided.

FIG. 8 is a schematic flowchart illustrating a behavior control method according to still another embodiment of the present disclosure.

As shown in FIG. 8, sending the indication information for the behavior control policy for the target base station to the core network device may include the following step S801.

At step S801, the indication information is sent to the core network device after establishing a connection with the core network device.

In an embodiment, after the target base station establishes the connection with the core network device, the behavior control policy for this base station may be indicated to the core network device by a configuration update signaling.

For example, the core network may be a 4G core network, and the target base station may send a mobility management entity (MME) configuration update signaling carrying the indication information to the core network device. For example, the core network may be a 5G core network, and the target base station may send an access and mobility management function (AMF) configuration update signaling carrying the indication information to the core network device.

According to the embodiment shown in FIG. 8, the target base station, after establishing a connection with the core network device, may indicate a behavior control policy for this base station to the core network device by means of a configuration update signaling. As a result, the target base station can indicate flexibly behavior control policy, so that when the behavior control policy for the target base station is updated or the like, the core network device can be notified in a timely manner, so as to improve the reliability of the behavior control.

FIG. 9 is a schematic flowchart illustrating a behavior control method according to still another embodiment of the present disclosure. The behavior control method shown in this embodiment may be performed by a core network device, the core network may include, but be not limited to a core network in a communication system such as a 4G core network, a 5G core network, a 6G core network, and the like. The core network device may communicate with a source base station and a target base station.

As shown in FIG. 9, the behavior control method may include the following steps S901 to S902.

At step S901, indication information for a behavior control policy for a target base station is obtained.

In an embodiment, the behavior control policy is configured to instruct the terminal to control the non-wireless communication behavior of the terminal after the terminal hands over to the target base station.

In an embodiment, the target base station may send the indication information for its own behavior control policy to the core network device. The indication information may be a base station type of the target base station, or the indication information may also be an identification of a number of behavior control policies.

At step S902, the indication information is sent to a source base station.

In an embodiment, the core network device may send this indication information received from the target base station to the source base station, so that the source base station may send the indication information to the terminal.

In an embodiment, the indication information is a base station type of the target base station, where the base station type corresponds to the behavior control policy for the target base station, i.e., the target base station may send its own base station type to the core network device.

In an embodiment, a correspondence between the base station type and the behavior control policy may be stored in the core network device, such that the core network device may determine the behavior control policy for the target base station based on the base station type of the target base station, and send the behavior control policy for the target base station directly to the source base station. Alternatively, the core network device may directly send the base station type of the target base station to the source base station. Referring to the embodiment shown in FIG. 2, the subsequent operations of the source base station will not be repeated here.

In an embodiment, the core network device may receive the indication information sent by the target base station during the process of establishing the connection with the target base station.

For example, the core network may be a 4G core network, the target base station may establish an S1 interface connection with the core network device, and the target base station may send an S1 setup request (S1 interface establishment request) signaling carrying the indication information to the core network device. For example, the core network may be a 5G core network, the target base station may establish an NG interface connection with the core network device, and the target base station may send an NG setup request (NG interface establishment request) signaling carrying the indication information to the core network device.

In an embodiment, the core network device may receive the indication information sent by the target base station after establishing the connection with the target base station.

For example, the core network may be a 4G core network, and the target base station may send an MME configuration update signaling carrying the indication information to the core network device. For example, the core network may be a 5G core network, and the target base station may send an AMF configuration update signaling carrying the indication information to the core network device.

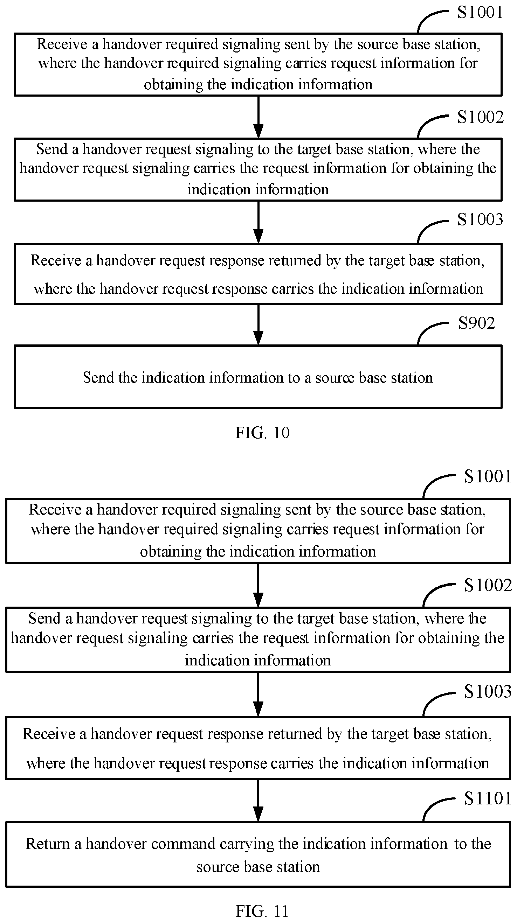

In an embodiment, the core network device may receive the indication information for the behavior control policy from the target base station based on the "handover process", as illustrated in FIG. 10 below.

FIG. 10 is a schematic flowchart illustrating a behavior control method according to still another embodiment of the present disclosure. As shown in FIG. 10, obtaining the indication information for the behavior control policy for the target base station may include the following steps S1001 to S1003.

At step S1001, a handover required signaling sent by the source base station is received, where the handover required signaling carries request information for obtaining the indication information.

In an embodiment, the source base station may request the core network device to send handover required signaling via an interface between the base station and the core network. Also, the source base station may request in this signaling to obtain the behavior control policy for the target base station.

In an embodiment, after receiving the handover required signaling sent by the source base station, the core network device may inquire whether the indication information for the behavior control policy for the target base station is saved. If the indication information is saved in the core network device, the indication information is returned directly to the source base station. If the indication information is not saved in the core network device, step S1002 is performed.

At step S1002, a handover request signaling is sent to the target base station, where the handover request signaling carries the request information for obtaining the indication information.

In an embodiment, the core network device may send the handover request signaling to the target base station, and request in the signaling to obtain the behavior control policy for the target base station. For example, a field may be added to the handover request signaling for the indication information for obtaining the behavior control policy.

At step S1003, a handover request response returned by the target base station is received, where the handover request response carries the indication information.

In an embodiment, the target base station may return the handover request response (such as handover request acknowledge signaling) to the core network device after receiving the handover request signaling from the core network device. Also, the target base station carries, in this handover request response, the indication information for the behavior control policy of this base station.

According to the embodiment shown in FIG. 10, the core network device, after receiving the request for obtaining the behavior control policy sent by the source base station, may promptly obtain the handover request response from the target base station. Also, the core network device, the source base station, and the target base station realize the obtaining of the behavior control policy based on the "handover process", which not only saves the signaling overhead, but also improves the processing efficiency.

In an embodiment, the core network device, after obtaining the indication information for the behavior control policy for the target base station, may also send the indication information to the source base station.

In an embodiment, the core network device may send the indication information for the behavior control policy for the target base station to the source base station, also based on the "handover process", as shown in FIG. 11.

FIG. 11 is a schematic flowchart illustrating a behavior control method according to still another embodiment of the present disclosure. As shown in FIG. 11, sending the indication information to the source base station may include the following step S1101.

At step S1101, a handover command carrying the indication information is returned to the source base station.

In an embodiment, the core network device, after receiving the handover required signaling sent by the source base station, may return a handover command carrying the indication information to the source base station if the core network device determines that the handover required signaling carries a request information for obtaining the indication information.

In an embodiment, the indication information that may be carried in the handover command may be a base station type of the target base station, or an identification for a behavior control policy, etc., without limitation in this embodiment.

According to the embodiment shown in FIG. 11, the core network device may provide timely feedback to the source base station after receiving the request for obtaining the behavior control policy sent by the source base station. Also, the core network device, the source base station, and the target base station realize the obtaining of the behavior control policy based on a "handover process", which not only saves the signaling overhead, but also improves the processing efficiency.

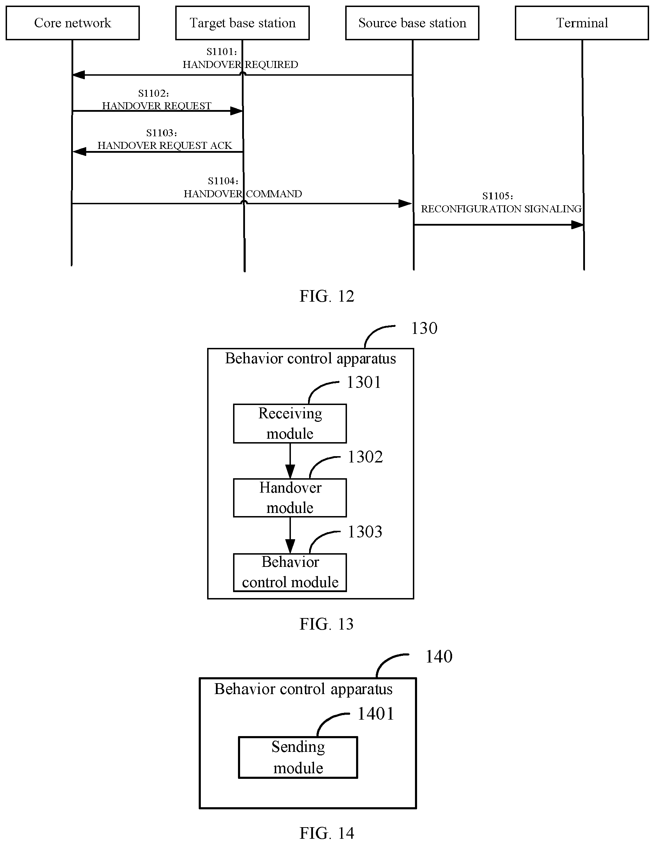

FIG. 12 is a schematic flowchart illustrating a behavior control method according to an embodiment of the present disclosure. The terminal, the source base station, the target base station, and the core network device shown in this embodiment may be the objects used in the behavior control method in any of the above-mentioned embodiments.

As shown in FIG. 12, the behavior control method may include the following steps S1201 to S1205.

At step S1201, the source base station sends a handover required signaling to the core network device, and requests, in the handover required signaling, to obtain a behavior control policy for the target base station.

At step S1202, the core network device sends a handover request signaling to the target base station and requests, in the handover request signaling, to obtain a behavior control policy for the target base station.

At step S1203, the target base station returns a handover request acknowledge signaling to the core network device, and the handover request acknowledge signaling carries indication information for the behavior control policy for the target base station.

The indication information may be a base station type of the target base station, or may be an identification of the behavior control policy.

At step S1204, the core network device returns a handover command signaling to the source base station, and the handover command signaling carries the indication information for the behavior control policy for the target base station.

The indication information may be a base station type of the target base station, or may be an identification of the behavior control policy.

At step S1205, the source base station sends a reconfiguration signaling to the terminal. For example, the reconfiguration signaling may be a RRCCONNECTIONRECONFIGURATION signaling, a RRCRECONFIGURATION signaling, or a MobilityControlInfo signaling. Also, the reconfiguration signaling carries the indication information for the behavior control policy for the target base station.

The indication information may be a base station type of the target base station, or may be an identification of the behavior control policy.

Subsequently, the terminal may attempt to access the target base station and disconnect from the source base station, as well as control its own non-wireless communication behavior in accordance with the behavior control policy for the target base station after accessing the target base station, and the detail will not be discussed herein.

Corresponding to the foregoing embodiments of the behavior control method, the present disclosure also provides embodiments of a behavior control method apparatus.

FIG. 13 is a schematic block diagram illustrating a behavior control apparatus according to an embodiment of the present disclosure. The behavior control apparatus illustrated in this embodiment may be applicable to a terminal. The terminal includes, but is not limited to, a communication device such as a cell phone, a tablet computer, a wearable device, a sensor, an IoT device, and the like. The terminal as a user equipment may communicate with a base station. The base station includes, but is not limited to, a base station in a communication system such as a 4^{th} generation (4G) base station, a 5^{th} generation (5G) base station, a 6^{th} generation (6G) base station, and the like. In an embodiment, the base station may be a base station to which the behavior control apparatus described in any subsequent embodiment applies.

As shown in FIG. 13, the behavior control apparatus may include a receiving module 1301.

The receiving module 1301 is configured to receive a handover instruction sent by a source base station, where the handover instruction is configured to instruct the terminal to hand over from the source base station to a target base station, and to indicate a behavior control policy for the target base station.

In an embodiment, the behavior control apparatus may further include a handover module 1302 and a behavior control module 1303.

The handover module 1302 is configured to hand over from the source base station to the target base station based on the handover instruction.

The behavior control module 1303 configured to control a non-wireless communication behavior of the terminal in accordance with the behavior control policy after the terminal successful hands over to the target base station.

In an embodiment, the handover instruction includes at least one of a base station type of the target base station corresponding to the behavior control policy for the target base station; or at least one behavior control policy.

In an embodiment, the behavior control policy includes at least one of an identification for the non-wireless communication behavior; a control mode for the non-wireless communication behavior; a control duration for the non-wireless communication behavior; or a control magnitude for the non-wireless communication behavior.

In an embodiment, the behavior control module 1303 is configured to control the non-wireless communication behavior within the control duration according to the control mode, where the behavior control policy includes the identification for the non-wireless communication behavior, the control mode for the non-wireless communication behavior, and the control duration for the non-wireless communication behavior.

In an embodiment, the behavior control module 1303, is configured to control the non-wireless communication behavior with the control magnitude according to the control mode, where the behavior control policy includes the identification for the non-wireless communication behavior, the control mode for the non-wireless communication behavior, and the control magnitude for the non-wireless communication behavior.

In an embodiment, the target base station includes at least one of a subway base station, or a high-speed rail base station.

In an embodiment, the non-wireless communication behavior includes at least one of: an audio output behavior, a display behavior, a prompting behavior, or a power supply behavior.

FIG. 14 is a schematic block diagram illustrating a behavior control apparatus according to another embodiment of the present disclosure. The behavior control apparatus shown in this embodiment may be applicable to a source base station. The source base station includes, but is not limited to, a base station in a communication system such as a 4G base station, a 5G base station, a 6G base station, and the like. The source base station may communicate with a terminal as a user equipment. The terminal includes, but is not limited to, a communication device such as a cell phone, a tablet computer, a wearable device, a sensor, an IoT device, and the like. In an embodiment, the terminal may be a terminal to which the behavior control apparatus described in any of the above-mentioned embodiments applies.

As shown in FIG. 14, the behavior control apparatus may include a sending module 1401.

The sending module 1401 is configured to send a handover instruction to a terminal, where the handover instruction is configured to instruct the terminal to hand over from the source base station to a target base station, and to indicate a behavior control policy for the target base station.

In an embodiment, the behavior control policy is configured to instruct the terminal to control a non-wireless communication behavior of the terminal after the terminal hands over from the source base station to the target base station.

In an embodiment, the sending module 1401 is further configured to obtain indication information for the behavior control policy for the target base station from a core network device.

In an embodiment, the indication information includes a base station type of the target base station. The sending module 1401 is further configured to determine, based on a correspondence between a preset base station type and a behavior control policy, the behavior control policy for the target base station.

In an embodiment, the sending module 1401 is configured to send a handover required signaling to the core network device, where the handover required signaling carries request information for obtaining the indication information; and receive a handover command returned by the core network device, where the handover command carries the indication information.

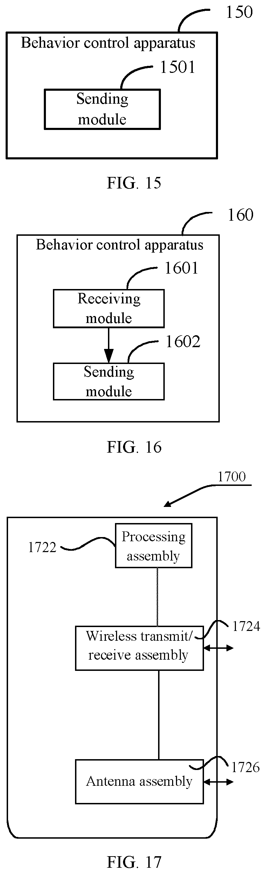

FIG. 15 is a schematic block diagram illustrating a behavior control apparatus according to yet another embodiment of the present disclosure. The behavior control apparatus shown in this embodiment may be applicable to a target base station. The target base station includes, but is not limited to, a base station in a communication system such as a 4G base station, a 5G base station, a 6G base station, and the like. The target base station may communicate with a terminal as a user equipment. The terminal includes, but is not limited to, a communication device such as a cell phone, a tablet computer, a wearable device, a sensor, an IoT device, and the like. In an embodiment, the terminal may be a terminal to which the behavior control apparatus described in any of the above-mentioned embodiments applies.

As shown in FIG. 15, the behavior control apparatus may include a sending module 1501.

The sending module 1501 is configured to send indication information for a behavior control policy for the target base station to a core network device.

In an embodiment, the behavior control policy is configured to instruct a terminal to control a non-wireless communication behavior of the terminal after the terminal hands over to the target base station.

In an embodiment, the indication information includes a base station type of the target base station, and the base station type corresponds to the behavior control policy for the target base station.

In an embodiment, the sending module 1501 is configured to receive a handover request signaling sent by the core network device, where the handover request signaling carries request information for obtaining the indication information; and return a handover request response to the core network device, where the handover request response carries the indication information.

In an embodiment, the sending module 1501 is configured to send the indication information to the core network device during a process of establishing a connection with the core network device.

In an embodiment, the sending module 1501 is configured to, when a core network is a 4G core network, send an S1 setup request signaling carrying the indication information to the core network device;

when the core network is a 5G core network, send an NG setup request signaling carrying the indication information to the core network device.

In an embodiment, the sending module 1501 is configured to send the indication information to the core network device after establishing a connection with the core network device.

In an embodiment, the sending module 1501 is configured to when a core network is a 4G core network, send an MME configuration update signaling carrying the base station type to the core network device; when the core network is a 5G core network, send an AMF configuration update signaling carrying the indication information to the core network device.

FIG. 16 is a schematic block diagram illustrating a behavior control apparatus according to still another embodiment of the present disclosure. The behavior control apparatus shown in this embodiment may be applicable to a core network device. The core network includes, but is not limited to, a core network in a communication system such as a 4G core network, a 5G core network, a 6G core network, and the like. The core network device may communicate with a source base station and a target base station.

As shown in FIG. 16, the behavior control apparatus includes a receiving module 1601 and a sending module 1602.

The receiving module 1601 is configured to obtain indication information for a behavior control policy for a target base station.

In an embodiment, the behavior control policy is configured to instruct a terminal to control a non-wireless communication behavior of the terminal after the terminal hands over to the target base station.

The sending module 1602 is configured to send the indication information to a source base station.

In an embodiment, the indication information includes a base station type of the target base station, and the base station type corresponds to a behavior control policy for the target base station.

In an embodiment, the receiving module 1601 is configured to receive the indication information sent by the target base station during a process of establishing a connection with the target base station.

In an embodiment, the receiving module 1601 is configured to receive the indication information sent by the target base station after establishing a connection with the target base station.

In an embodiment, the receiving module 1601 is configured to: receive a handover required signaling sent by the source base station, where the handover required signaling carries request information for obtaining the indication information; send a handover request signaling to the target base station, where the handover request signaling carries the request information for obtaining the indication information; and receive a handover request response returned by the target base station, where the handover request response carries the indication information.

In an embodiment, the sending module 1602 is configured to return a handover command carrying the indication information to the source base station.

With respect to the behavior control apparatus in the above-mentioned embodiments, the specific manner in which each module performs operations has been described in detail in the embodiments of the relevant method, and will not be described in detail herein.

Since the apparatus embodiments basically correspond to the method embodiments, it is sufficient to refer to relevant parts of the description of the method embodiments. The above-mentioned apparatus embodiments are merely schematic, where the modules described as separated components may or may not be physically separated, and the components shown as modules may or may not be physical modules, i.e., they may be located in one place or may be distributed to multiple network modules. Some or all of these modules may be selected to achieve the purpose of the solution according to actual needs, and these modules can be understood and implemented by those skilled in the art without creative works.

The behavior control methods in the present disclosure are described in general terms below in conjunction with particular technical details.

A cellular network may control a behavior of a cell phone in a connected state through a handover process based on an interface between a base station and a core network.

In an embodiment, a source base station requests the core network to send a base station type of a target base station via the interface between the base station and the core network, for example, via a handover required signaling.

In an embodiment, after receiving the request from the source base station, the core network sends the base station type of the target base station to the source base station via the interface between the base station and the core network, for example, via a handover command signaling.

In an embodiment, before the core network sends the base station type of the target base station to the source base station, the core network may obtain the base station type of the target base station through a handover process as the following.

The core network may request the target base station to send its base station type to the core network via a handover request signaling.

After receiving this signaling, the target base station may send its base station type to the core network via a handover request acknowledge signaling.

In an embodiment, the type of the target base station may be communicated by the target base station to the core network via an interface between the base station and the core network.

In an embodiment, the target base station may be informed when the interface between the base station and core network is established. For example, in the case of an EUTRAN system, the target base station may be informed via a S1 setup request signaling. In case of an NR system, the target base station may be informed via an NG setup request signaling.

In an embodiment, the target base station may be informed after the interface between the base station and core network is established. For example, in the case of an EUTRAN system, the target base station may be informed via an MME configuration update signaling. In case of an NR system, the target base station may be informed via an AMF configuration update signaling.

In an embodiment, after the source base station learns the base station type of the target base station, the terminal is informed of the control behavior corresponding to the base station type of the target base station.

In case of an EUTRAN system, the source base station may inform the terminal by a RRCCONNECTIONRECONFIGURATION signaling.

In case of an NR system, the source base station may inform the terminal by a RRCRECONFIGURATION signaling.

The source base station may inform the terminal by a MobilityControlInfo signaling.

In an embodiment, the terminal, after receiving the instruction from the source base station, accesses the target base station and complies with the control behavior of the target base station.

Embodiments of the present disclosure also provide a behavior control device including: a processor; and a memory storing computer programs, where the computer programs, when executed by the processor, cause the processor to perform the behavior control method in any of the above-mentioned embodiments.

Embodiments of the present disclosure also provide a computer-readable storage medium, storing computer programs thereon, where the computer programs, when executed by a processor, cause the processor to perform the behavior control method in any of the above-mentioned embodiments.

FIG. 17 is a schematic block diagram illustrating a behavior control device according to an embodiment of the present disclosure. As shown in FIG. 17, The device 1700 may be provided as a base station. In an embodiment, the base station may be a source base station or a target base station. The device 1700 includes a processing assembly 1722, a wireless transmit/receive assembly 1724, an antenna assembly 1726, and a signal processing portion specific to the wireless interface, and the processing assembly 1722 may further include one or more processors. One of the processors in the processing component 1722 may be configured to implement the behavior control method described in any of the above-mentioned embodiments.

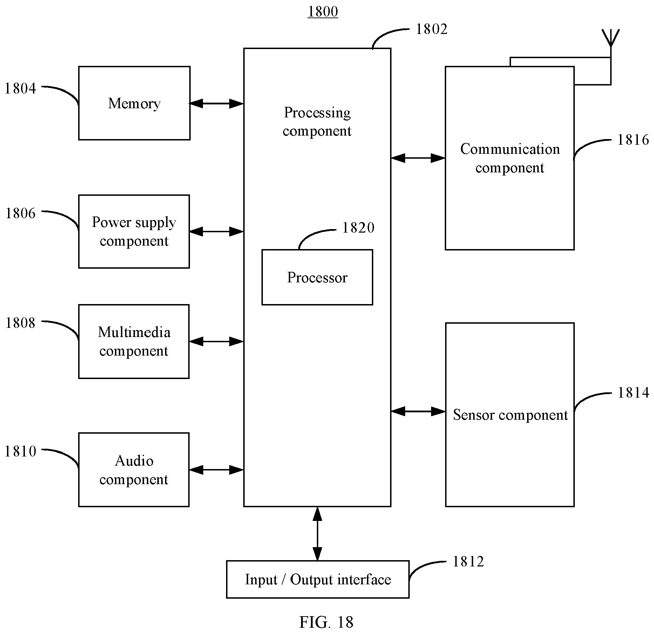

FIG. 18 is a schematic block diagram illustrating a behavior control device 1800 according to another embodiment of the present disclosure. For example, the device 1800 may be a mobile phone, a computer, a digital broadcast user equipment, a message transceiver, a game console, a tablet device, a medical device, a fitness device, a personal digital assistant, and the like.

As shown in FIG. 18, the electronic device 1800 may include one or more assemblies of a processing component 1802, a memory 1804, a power supply component 1806, a multimedia component 1808, an audio component 1810, an input / output (I/O) interface 1812, a sensor component 1814 and a communication component 1816.

The processing component 1802 generally controls the overall operation of the electronic device 1800, such as operations associated with displays, phone calls, data transmissions, camera operations, and recording operations. The processing component 1802 may include one or more processors 1820 to execute instructions to complete all or a part of the above-mentioned behavior control methods. Further, the processing component 1802 may include one or more modules to facilitate interaction between the processing component 1802 and another component. For example, the processing component 1802 may include a multimedia module to facilitate the interaction between the multimedia component 1808 and the processing component 1802. For another example, the processing component 1802 may read executable instructions from the memory to perform steps in the data transmission method provided in an example as described above.

The memory 1804 is configured to store different types of data to support operation at the electronic device 1800. Examples of such data include instructions, contact data, phonebook data, messages, pictures, videos, and so on for any application or method that operates on the electronic device 1800. The memory 1804 may be implemented by any type of volatile or non-volatile storage devices or a combination thereof, such as a Static Random Access Memory (SRAM), an Electrically Erasable Programmable Read-Only Memory (EEPROM), an Erasable Programmable Read-Only Memory (EPROM), a Programmable Read-Only Memory (PROM), a Read-Only Memory (ROM), a magnetic memory, a flash memory, a disk or a CD.

The power supply component 1806 provides power to different assemblies of the electronic device 1800. The power supply component 1806 may include a power source management system, one or more power sources and other assemblies associated with generating, managing and distributing power for the electronic device 1800.

The multimedia component 1808 includes a display screen that provides an output interface between the electronic device 1800 and a user. In some embodiments, the multimedia component 1808 may include a front camera and/or a rear camera. When the electronic device 1800 is in an operating mode, such as in a shooting mode or a video mode, the front camera and/or the rear camera may receive external multimedia data. Each of the front camera and the rear camera may be a fixed optical lens system or be of a focal length and a capability of an optical zoom.

The audio component 1810 is configured to output and/or input an audio signal. For example, the audio component 1810 includes a microphone (MIC). When the electronic device 1800 is in an operating mode, for example, in a call mode, a recording mode or a speech recognition mode, the microphone is configured to receive an external audio signal. The received audio signal may be further stored in the memory 1804 or sent via the communication component 1816. In some embodiments, the audio component 1810 also includes a speaker for outputting an audio signal.

The I/O interface 1812 may provide an interface between the processing component 1802 and peripheral interface modules. The above peripheral interface modules may include a keyboard, a click wheel, buttons and so on. Such buttons may include but not limited to: a home button, a volume button, a start button and a lock button.

The sensor component 1814 includes one or more sensors for evaluating states of the electronic device 1800 in different aspects. For example, the sensor component 1814 may detect the on/off status of the electronic device 1800, and relative positioning of component, for example, the component is a display and a keypad of the electronic device 1800. The sensor component 1814 may also detect a change in position of the electronic device 1800 or a component of the electronic device 1800, a presence or absence of the contact between a user and the electronic device 1800, an orientation or an acceleration/deceleration of the electronic device 1800, and a change in temperature of the electronic device 1800. The sensor component 1814 may include a proximity sensor configured to detect presence of a nearby object without any physical contact. The sensor component 1814 may also include an optical sensor, such as a CMOS or CCD image sensor used in an imaging application. In some embodiments, the sensor component 1814 may also include an acceleration sensor, a gyroscope sensor, a magnetic sensor, a pressure sensor, or a temperature sensor.

The communication component 1816 is configured to facilitate wired or wireless data transmission between the electronic device 1800 and other devices. The electronic device 1800 may access a wireless network based on a data transmission standard, such as Wi-Fi, 2G, 3G, 4G 5G or 6G, or a combination thereof. In some embodiments, the communication component 1816 may receive a broadcast signal or broadcast-related information from an external broadcast management system via a broadcast channel. In an example, the communication component 1816 may also include a Near Field Communication (NFC) module to facilitate short-range data transmissions. For example, the NFC module may be implemented based on radio frequency identification (RFID) technology, infrared data association (IrDA) technology, ultra-wideband (UWB) technology, Bluetooth (BT) technology and other technologies.

In some illustrative embodiments, the electronic device 1800 may be implemented by one or more of an application -specific integrated circuit (ASIC), a digital signal processor (DSP), a digital signal processing device (DSPD), programmable logical device (PLD), field programmable gate array (FPGA), a controller, microcontroller, a microprocessor or other electronic components to perform the above-mentioned behavior control methods.

In an example embodiment, there is also provided a non-transitory machine readable storage medium including instructions, such as a memory 1804 including instructions, where the instructions are executable by the processor 1820 of the electronic device 1800 to implement the above-mentioned behavior control methods. For example, the non-transitory computer-readable storage medium may be a Read-Only Memory (ROM), a Random Access Memory (RAM), a CD-ROM, a magnetic tape, a floppy disk and an optical data storage device, etc.

After considering the specification and practicing the present disclosure, a person skilled in the art would easily conceive of other implementations of the present disclosure. The present disclosure is intended to cover any variations, uses, modification or adaptations of the present disclosure that follow the general principles thereof and include common knowledge or conventional technical means in the related art that are not disclosed in the present disclosure. The specification and examples are considered as exemplary only, with a true scope and spirit of the present disclosure being indicated by the following claims.

It is to be understood that the present disclosure is not limited to the precise construction described herein and shown in the drawings, and that various modifications and changes may be made without departing from the scope thereof. The scope of the disclosure is to be limited only by the appended claims.

It will be noted that the relational terms such as "first" and "second" used herein are merely intended to distinguish one entity or operation from another entity or operation rather than to require or imply any such actual relation or order existing between these entities or operations. Also, the term "including", "containing" or any variation thereof is intended to encompass non-exclusive inclusion, so that a process, method, article or device including a series of elements includes not only those elements but also other elements not listed explicitly or those elements inherent to such a process, method, article or device. Without more limitations, an element defined by the statement "including a..." shall not be precluded to include additional same elements present in a process, method, article or device including the elements.

The above are detailed descriptions of methods and apparatuses provided according to the embodiments of the present disclosure. Specific examples are used herein to set forth the principles and the implementing methods of the present disclosure, and the descriptions of the above embodiments are only meant to help understanding of the methods and the core idea of the present disclosure. Meanwhile, those of ordinary skill in the art may make alterations to the specific embodiments and the scope of application in accordance with the idea of the present disclosure. In conclusion, the contents of the present specification shall not be interpreted as limiting to the present disclosure.

## Claims

1. A behavior control method, performed by a terminal, and comprising:
receiving a handover instruction sent by a source base station, wherein the handover instruction is configured to instruct the terminal to hand over from the source base station to a target base station, and to indicate a behavior control policy for the target base station.

2. The method of claim 1, further comprising:
handing over, based on the handover instruction, from the source base station to the target base station; and
after successfully handing over to the target base station, controlling a non-wireless communication behavior of the terminal according to the behavior control policy.

3. The method of claim 1, wherein the handover instruction comprises at least one of:
a base station type of the target base station corresponding to the behavior control policy for the target base station; or
at least one behavior control policy.

4. The method of claim 2, wherein the behavior control policy comprises at least one of:
an identification for the non-wireless communication behavior;
a control mode for the non-wireless communication behavior;
a control duration for the non-wireless communication behavior; or
a control magnitude for the non-wireless communication behavior.

5. The method of claim 4, wherein controlling the non-wireless communication behavior of the terminal according to the behavior control policy comprises:
controlling the non-wireless communication behavior within the control duration according to the control mode, wherein the behavior control policy comprises the identification for the non-wireless communication behavior, the control mode for the non-wireless communication behavior, and the control duration for the non-wireless communication behavior.

6. The method of claim 4, wherein controlling the non-wireless communication behavior of the terminal according to the behavior control policy comprises:
controlling the non-wireless communication behavior with the control magnitude according to the control mode, wherein the behavior control policy comprises the identification for the non-wireless communication behavior, the control mode for the non-wireless communication behavior, and the control magnitude for the non-wireless communication behavior.

7. The method of claim 1, wherein the target base station comprises at least one of a subway base station, or a high-speed rail base station.

8. The method of claim 2, wherein the non-wireless communication behavior comprises at least one of an audio output behavior, a display behavior, a prompting behavior, or a power supply behavior.

9. A behavior control method, performed by a source base station, and comprising:
sending a handover instruction to a terminal, wherein the handover instruction is configured to instruct the terminal to hand over from the source base station to a target base station, and to indicate a behavior control policy for the target base station.

10. The method of claim 9, wherein the behavior control policy is configured to instruct the terminal to control a non-wireless communication behavior of the terminal after the terminal hands over from the source base station to the target base station.

11. The method of claim 9, further comprising, before sending the handover instruction to the terminal:
obtaining indication information for the behavior control policy for the target base station from a core network device.

12. The method of claim 11, wherein the indication information comprises a base station type of the target base station, and the method further comprises:
determining, based on a correspondence between a preset base station type and a behavior control policy, the behavior control policy for the target base station.

13. The method of claim 11, wherein obtaining the indication information for the behavior control policy for the target base station from the core network device comprises:
sending a handover required signaling to the core network device, wherein the handover required signaling carries request information for obtaining the indication information; and
receiving a handover command returned by the core network device, wherein the handover command carries the indication information.

14. A behavior control method, performed by a target base station, and comprising:
sending indication information for a behavior control policy for the target base station to a core network device.

15. The method of claim 14, wherein the behavior control policy is configured to instruct a terminal to control a non-wireless communication behavior of the terminal after the terminal hands over to the target base station.

16. The method of claim 14, wherein the indication information comprises a base station type of the target base station, and the base station type corresponds to the behavior control policy for the target base station.

17. The method of claim 14, wherein sending the indication information for the behavior control policy for the target base station to the core network device comprises:
receiving a handover request signaling sent by the core network device, wherein the handover request signaling carries request information for obtaining the indication information; and
returning a handover request response to the core network device, wherein the handover request response carries the indication information.

18. The method of claim 14, wherein sending the indication information for the behavior control policy for the target base station to the core network device comprises:
sending the indication information to the core network device during a process of establishing a connection with the core network device.

19. The method of claim 18, wherein sending the indication information to the core network device during the process of establishing the connection with the core network device comprises:
when a core network is a 4G core network, sending an S1 setup request signaling carrying the indication information to the core network device;
when the core network is a 5G core network, sending an NG setup request signaling carrying the indication information to the core network device.

20. The method of claim 14, wherein sending the indication information for the behavior control policy for the target base station to the core network device comprises:
sending the indication information to the core network device after establishing a connection with the core network device.

21. The method of claim 20, wherein sending the indication information to the core network device after establishing a connection with the core network device comprises:
when a core network is a 4G core network, sending an MME configuration update signaling carrying the base station type to the core network device;
when the core network is a 5G core network, sending an AMF configuration update signaling carrying the indication information to the core network device.

22. A behavior control method, performed by a core network device, and comprising:
obtaining indication information for a behavior control policy for a target base station; and
sending the indication information to a source base station.

23. The method of claim 22, wherein the behavior control policy is configured to instruct a terminal to control a non-wireless communication behavior of the terminal after the terminal hands over to the target base station.

24. The method of claim 22, wherein the indication information comprises a base station type of the target base station, and the base station type corresponds to a behavior control policy for the target base station.

25. The method of claim 22, wherein obtaining the indication information for the behavior control policy for the target base station comprises:
receiving the indication information sent by the target base station during a process of establishing a connection with the target base station.

26. The method of claim 22, wherein obtaining the indication information for the behavior control policy for the target base station comprises:
receiving the indication information sent by the target base station after establishing a connection with the target base station.

27. The method of claim 22, wherein obtaining the indication information for the behavior control policy for the target base station comprises:
receiving a handover required signaling sent by the source base station, wherein the handover required signaling carries request information for obtaining the indication information;
sending a handover request signaling to the target base station, wherein the handover request signaling carries the request information for obtaining the indication information; and
receiving a handover request response returned by the target base station, wherein the handover request response carries the indication information.

28. The method of claim 27, wherein sending the indication information to the source base station comprises:
returning a handover command carrying the indication information to the source base station.

29. A behavior control apparatus, comprising:
a receiving module, configured to receive a handover instruction sent by a source base station, wherein the handover instruction is configured to instruct the terminal to hand over from the source base station to a target base station, and to indicate a behavior control policy for the target base station.

30. A behavior control apparatus, comprising:
a sending module, configured to send a handover instruction to a terminal, wherein the handover instruction is configured to instruct the terminal to hand over from the source base station to a target base station, and to indicate a behavior control policy for the target base station.

31. A behavior control apparatus, comprising:
a sending module, configured to send indication information for a behavior control policy for the target base station to a core network device.

32. A behavior control apparatus, comprising:
a receiving module, configured to obtain indication information for a behavior control policy for a target base station; and
a sending module, configured to send the indication information to a source base station.

33. A behavior control device, comprising:
a processor; and
a memory storing computer programs;
wherein the computer programs, when executed by the processor, cause the processor to perform the behavior control method of any one of claims 1 to 28.

34. A computer-readable storage medium, storing computer programs thereon, wherein the computer programs, when executed by a processor, cause the processor to perform the behavior control method of any one of claims 1 to 28.
